# EUROPEAN PATENT APPLICATION

(11) **EP 2 650 272 A1**
(43) Date of publication of application: **16.10.2013**
(21) Application number: 11846452.8
(22) Date of filing: 09.12.2011
(51) Int. Cl.: C04B 35/80, C04B 35/64

(54) **OXIDE-BASED COMPOSITE MATERIAL**

(30) Priority: 10.12.2010 JP 2010275180
(71) Applicant: National Institute for Materials Science, Tsukuba-shi, Ibaraki 305-0047 (JP)
(72) Inventor: HARADA Hiroshi, Tsukuba-shi Ibaraki 305-0047 (JP); TETSUI Toshimitsu, Tsukuba-shi Ibaraki 305-0047 (JP); KAWAGISHI Kyoko, Tsukuba-shi Ibaraki 305-0047 (JP); GU Yuefeng, Tsukuba-shi Ibaraki 305-0047 (JP); YOKOKAWA Tadaharu, Tsukuba-shi Ibaraki 305-0047 (JP); KOBAYASHI Toshiharu, Tsukuba-shi Ibaraki 305-0047 (JP); OSADA Toshio, Tsukuba-shi Ibaraki 305-0047 (JP); ZHONG Zhihong, Tsukuba-shi Ibaraki 305-0047 (JP)
(74) Representative: Calamita, Roberto
(86) International application number: PCT/JP2011/078563
(87) International publication number: WO 2012/077787

(57) **Abstract**

The oxide matrix composite material is obtained by subjecting a fiber composed of at least one oxide or complex oxide and a matrix composed of at least one oxide or complex oxide to composite formation. For the fiber and the matrix, a component composition is selected such that the fiber and the matrix keep thermodynamic equilibrium to each other in a temperature range not exceeding the melting temperature, and a fiber diameter of the fiber at the time of equilibrium keeps 1/2 or more of a fiber diameter of the fiber at the start of the composite formation.

## Description

### Technical Field

The present invention relates to an oxide matrix composite material obtained by reinforcing a matrix of an oxide or complex oxide with fibers of an oxide or complex oxide. In detail, the present invention relates to an oxide matrix composite material not having an interface layer which has been introduced for preventing a reaction of a matrix and a fiber generated during the manufacturing process and the use at high temperatures.

### Background Art

In recent years, ceramic matrix composite materials are watched as a heat-resistant material capable of being used at high temperatures of 1,000°C or higher at which metal materials are difficult to be used, and a part thereof has been put into practical use. In addition, ceramic matrix composite materials have also been put into practical use for applications at not higher than 1,000°C by utilizing their light weights. Characteristic features of the ceramic matrix composite materials reside in the matter that a ceramic matrix is reinforced with ceramic fibers, thereby improving toughness which was considered to be a fatal defect in conventional monolithic ceramics. In order to improve this toughness, in the ceramic matrix composite materials, the matrix and the fiber are subjected to composite formation, thereby introducing a large number of interfaces.

In general, on the one hand ceramics are more excellent in high temperature strength than metal materials, but on the other they involve such a drawback that they are very brittle. Accordingly, a once generated crack linearly propagates in a material with ease at the shortest distance, and hence, macroscopic fracture is caused within a short time. This is the main reason why monolithic ceramics have not been substantially used to date.

On the other hand, in ceramic matrix composite materials, there are a large number of interfaces between a matrix and a fiber. Accordingly, a crack generated in the matrix is once stopped at the interface, and for example, it turns from a horizontal direction to a perpendicular direction along the interface and propagates. As a result, the propagation direction of the crack is not linear but deflected, so that the propagation distance becomes long. In addition, stress relaxation which is not seen in monolithic ceramics is also caused due to crosslinking effect and withdrawing effect by the fibers, and the crack growth rate becomes slow.

Because of an enhancement of the fracture toughness by such deflection of crack, crosslinking effect and withdrawal, it is possible to fundamentally improve rapid fracture which has been considered to be the main drawback in monolithic ceramics and low reliability to be caused due to this. Accordingly, it becomes possible to apply the ceramic matrix composite material to applications for which excellent high temperature strength of ceramics much more than metal materials can be utilized.

Representative examples of ceramic matrix composite materials include a so-called SiC/SiC composite material in which a matrix of SiC (silicon carbide) is reinforced with SiC fibers; a composite material in which a matrix of aluminum is reinforced with SiC fibers; and the like. In manufacturing and using such a ceramic matrix composite material, from the viewpoint of ensuring toughness, how to keep an interface is the maximum technical issue. For example, in the case of an SiC/SiC composite material, since the matrix and the fiber are a homogeneous material, in particular if the composite material is fabricated without taking an interface layer into consideration, fusion between the matrix and the fiber is caused due to high temperature holding for sintering the matrix at the time of manufacture or high temperature holding during the use as a member, whereby the same structure as that in a monolithic ceramic is formed. As a result, suppression of the crack growth which is the main advantage of ceramic matrix composite materials is impaired.

In this way, with respect to the ceramic matrix composite materials, it is necessary to hold the interface such that a reaction between the matrix and the fiber does not occur at high temperatures. Then, in conventional SiC/SiC composite materials, in a manufacturing process, by coating fibers with C (carbon) and allowing the coated C to serve as an interface layer, the reaction between the matrix and the fiber is prevented from occurring in high temperature holding at the time of manufacture and high temperature holding during the use.

However, in SiC/SiC composite materials, C of the interface layer is liable to be conspicuously oxidized during the use at high temperatures. At the time of manufacture, the oxidation can be avoided due to sintering in a non-oxidizing atmosphere. However, in the case of using an SiC/SiC composite material as a high temperature component in a high temperature oxidizing atmosphere, since C is significantly inferior to SiC in terms of oxidation resistance, C is preferentially oxidized. Following the oxidation of C, the whole of the inside of the ceramic matrix composite material is oxidized, and deformation or oxidation, or the like of the whole of the material is generated, so that it may become impossible to keep properties required as a high temperature component. In addition, even if the interface layer is omitted, SiC is essentially oxidized in the use environment, and hence, an enhancement of the oxidation resistance is absolutely essential for SiC/SiC composite materials.

Incidentally, it is investigated to coat SiC fibers with BN (boron nitride) with good oxidation resistance for the interface layer. However, such a technology has not been put into practical use to date because there are involved such problems that as compared with an SiC/SiC composite material using C as an interface layer, the manufacturing costs are markedly high, the formation of a stable interface is difficult, and the like.

As another representative ceramic matrix composite material, a composite material in which an oxide-based fiber is subjected to composite formation with an oxide, for example, an alumina/alumina composite material is developed. Different from monolithic oxide-based ceramics, the alumina/alumina composite material is confirmed to have large fracture resistance. In such a ceramic matrix composite material, in order to prevent a reaction between the oxide-based fiber and the oxide-based matrix, coating is applied to the fiber one by one. The composite material in which the oxide-based fiber to which coating has been applied and the oxide-based matrix are subjected to composite formation is confirmed to exhibit large fracture resistance against single oxide-based ceramics. Here, the term "oxide-based" means an oxide or a complex oxide.

Now, coating must be uniformly applied to the fiber one by one in a thickness of not more than several microns.

However, in oxides or complex oxides of a fiber bundle composed of a lot of fibers or a sheet form, in the case of applying a manufacturing method of ceramic matrix composite material which has been known to date, it is difficult to apply uniform coating to the fiber one by one, and the coating is liable to exfoliate at the time of manufacture, so that handling of the fibers after coating was not always easy. If a part of the coating exfoliates in a composite formation process to produce a portion in which the fiber and the matrix come into direct contact with each other, a reinforcing effect by the fibers in the contact portion is impaired. Therefore, the advantages to be brought due to the composite formation of the ceramic matrix composite material drastically decrease. For the fibers to be carefully handled, and for exfoliation of the coating to be prevented from occurring, thereby realizing an optimum interface, are technically difficult and lead to an increase of the manufacturing costs.

In order to solve the problems accompanied by such ceramic matrix composite materials in which an oxide-based fiber is subjected to composite formation with an oxide-based matrix, there are proposed some methods. For example, there are known a method in which a primary composite impregnated with a metal or metal oxide different from a main component of ceramic fibers is subjected to composite formation with a metal oxide matrix and sintered; a method in which the surface layer of oxide-based fiber is impregnated with aluminum phosphate which is hardly reactive with the fiber, or aluminum phosphate is used as a matrix; and the like.
- JP-A-11-49570
- JP-A-2002-173376
- JP-A-2003-40685
- JP-A-9-67194
- Akihiko OTSUKA, Yoshiharu WAKU, Kuniyuki KITAGAWAand NorioARAI, J. Ceram. Soc. Japan, Vol. 111, pp.87-92 (2003)

### Summary of Invention

### Technical Problem

As described above, in current ceramic matrix composite materials, in order to prevent a reaction or fusion between a matrix and a fiber from occurring, it is necessary to form an interface layer by introducing a heterogeneous material. However, this matter encounters such a problem that another harmful influence is brought.

In view of these circumstances, the present invention has been made. An object of the present invention is to provide an oxide matrix composite material which even when held at high temperatures for a long time, does not cause a reaction or fusion between a matrix and a fiber without introducing a heterogeneous material and in which a stable interface is formed.

### Solution to Problem

In order to solve the foregoing problem, the oxide matrix composite material according to the present invention is an oxide matrix composite material obtained by subjecting a fiber composed of at least one oxide or complex oxide and a matrix composed of at least one oxide or complex oxide to composite formation, characterized in that for the fiber and the matrix, a component composition is selected such that the fiber and the matrix keep thermodynamic equilibrium to each other in a temperature range not exceeding the melting temperature, and a fiber diameter of the fiber at the time of equilibrium keeps 1/2 or more of a diameter fiber of the fiber at the start of the composite formation.

In addition, in the oxide matrix composite material according to the present invention, it is preferable that the fiber and the matrix are formed of an oxide or complex oxide of Si, Ti, Zr, Mg, Hf, Al, or a rare earth element.

### Advantageous Effects of Invention

According to the present invention, since the fiber and the matrix keep the thermodynamic equilibrium even at high temperatures, movement of an interface between the fiber and the matrix does not occur. Accordingly, the interface formed at the time of manufacturing the oxide matrix composite material is kept as it is, and the reaction or fusion between the fiber and the matrix is not caused even during the use at high temperatures. An oxide matrix composite material having a stable interface formed therein is realized.

### Brief Description of Drawings

Fig. 1 is a model view of an oxide matrix composite material according to the present invention.
Fig. 2 is an appearance photograph of an oxide matrix composite material fabricated as Example, which is a ceramic matrix composite material obtained by laminating materials obtained by impregnating an alumina matrix among two-dimensionally woven mullite fibers, followed by sintering in the air at atmospheric pressure and 1,500°C for 2 hours.
Fig. 3 is an optical microscopic photograph showing a microstructure in the cross section of the oxide matrix composite material shown in Fig. 2.
Fig. 4 is an optical microscopic photograph showing the fracture surface at the time of fracturing by force the oxide matrix composite material shown in Fig. 2.
Fig. 5 is an appearance photograph of an oxide matrix composite material fabricated as Comparative Example, which is an oxide matrix composite material obtained by laminating materials obtained by impregnating an alumina matrix among two-dimensionally woven (80 mass % Al₂O₃ + 20 mass % SiO₂) fibers, followed by sintering in the air at atmospheric pressure and 1,500°C for 2 hours.
Fig. 6 is an optical microscopic photograph showing a microstructure in the cross section of the oxide matrix composite material shown in Fig. 5.
Fig. 7 is an optical microscopic photograph showing the fracture surface at the time of fracturing by force the oxide matrix composite material shown in Fig. 5.

### Description of Embodiments

In the oxide matrix composite material according to the present invention, for the fiber composed of at least one oxide or complex oxide and the matrix composed of at least one oxide or complex oxide, a component composition is selected such that the fiber and the matrix keep thermodynamic equilibrium to each other in a temperature range not exceeding the melting temperature, and a fiber diameter of the fiber at the time of equilibrium keeps 1/2 or more of a diameter of the fibers at the start of the composite formation. In view of the fact that a fiber diameter of the fiber at the time of equilibrium keeps 1/2 or more of a fiber diameter of the fiber at the start of the composite formation, excellent toughness which the oxide matrix composite material originally possesses can be kept. Preferably, the component composition is made such that the fiber diameter of the fiber at the time of equilibrium keeps 3/4 or more of the fiber diameter of the fiber at the start of the composite formation.

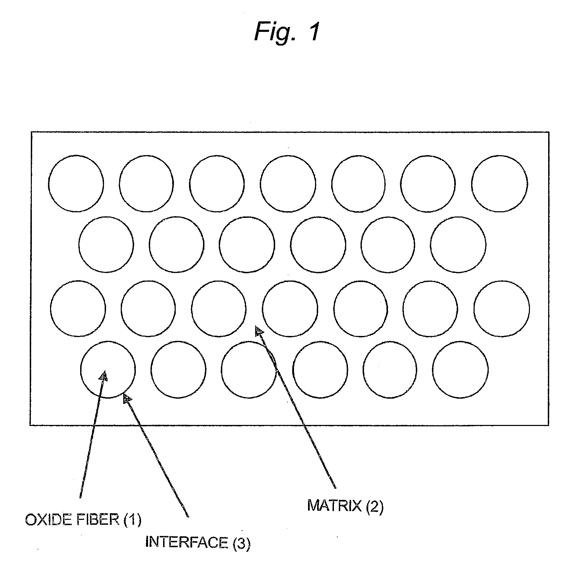

Fig. 1 is a model view of an oxide matrix composite material according to the present invention.

When a fiber 1 and a matrix 2 are in a thermodynamic equilibrium, an interface 3 existing between the both is kept even at the time of manufacturing an oxide matrix composite material and at the time of using it at high temperatures. Accordingly, propagation of a crack in the oxide matrix composite material is suppressed, and an effect for enhancing toughness of the oxide matrix composite material is steadfastly maintained. On the other hand, in the case where the fiber 1 and the matrix 2 are not in a thermodynamic equilibrium, the fiber 1 and the matrix 2 react with each other at high temperatures, whereby the initial interface vanishes. Alternatively, components constituting the fiber transfer into the matrix, and the fiber diameter decreases, so that good toughness which the oxide matrix composite material originally possesses is impaired.

In the oxide matrix composite material according to the present invention, even when sintered in the air without particularly controlling the atmosphere, the fiber and the matrix do not react with each other, and an interface is formed in the boundary. The conventional method of applying coating onto the surface of a fiber for the purpose of forming an interface layer involves such a significant problem that the interface vanishes following incomplete coating. However, in the oxide matrix composite material according to the present invention, since the matrix is in a thermodynamic equilibrium to the fiber at high temperatures, the interface is kept as it is, and the reaction or fusion between the fiber and the matrix is not caused even during the use at high temperatures. The stable interface is kept. In addition, the oxide matrix composite material according to the present invention also has such an advantage that the manufacturing costs significantly decrease because it can be sintered in the air. Incidentally, as a matter of course, it is also possible to manufacture the oxide matrix composite material according to the present invention by sintering in a non-oxidizing atmosphere or under an elevated pressure.

Examples of the component composition of the fiber and the matrix include oxides and complex oxides of Si, Ti, Zr, Mg, Hf, Al, or a rare earth element. Specifically, the following are exemplified for a combination of the component composition of the fiber and the matrix. However, the combination is not limited to the following as long as the combination matches the gist of the present invention. In addition, the component composition may vary depending upon a stoichiometric composition so long as the equilibrium state is kept.

### Part 1: Combination of oxide of Si and oxide of Ti

- SiO₂-TiO₂

### Part 2: Combination of oxide of Si and oxide of Mg

- MgO-Mg₂SiO₄
- Mg₂SiO₄-MgSiO₃
- MgSiO₃-SiO₂

### Part 3: Combination of oxide of Si and oxide of Hf

- HfO-HfSiO₄
- HfSiO₄-SiO₂

### Part 4: Combination of oxide of Si and oxide of Al

- Al₂O₃-3Al₂O₃2SiO₂ (mullite)
- 3Al₂O₃2SiO₂ (mullite)-SiO₂

### Part 5: Combination of oxide of Ti and oxide of Zr

- TiO₂-ZrTi₂O₆
- ZrTi₂O₆-ZrO₂

### Part 6: Combination of oxide of Ti and oxide of Mg

- TiO₂-MgTi₂O₅
- MgTi₂O₅-MgTiO₃

### Part 7: Combination of oxide of Ti and oxide of Hf

- TiO₂-Ti_{0.5}Hf_{0.5}O₂
- Ti_{0.5}Hf_{0.5}O₂-HfO₂

### Part 8: Combination of oxide of Ti and oxide of Al

- TiO₂-Al₂O₃

### Part 9: Combination of oxide of Zr and oxide of Mg

- MgO₂-ZrO₂

### Part 10: Combination of oxide of Zr and oxide of Al

- ZrO₂-Al₂O₃

### Part 11: Combination of oxide of Mg and oxide of Al

- Al₂O₃-MgAl₂O₄
- MgAl₂O₄-MgO

### Part 12: Combination of oxide of Hf and oxide of Al

- HfO₂-Al₂O₃

### Part 13: Combination of oxide of Si and oxide of rare earth element

- SiO₂-Y₂Si₂O₇

### Part 14: Combination of oxide of Ti and oxide of rare earth element

- TiO₂-Yb₂Ti₂O₇
- TiO₂-Lu₂Ti₂O₇
- TiO₂-Ho₂Ti₂O₇
- TiO₂-Y₂O₃
- TiO₂-Dy₂Ti₂O₇

### Part 15: Combination of oxide of Zr and oxide of rare earth element

- ZrO₂-La_{1.64}Zr_{0.27}O₃
- ZrO₂-Gd₂Zr₂O,
- ZrO₂-Y₂O₃

### Part 16: Combination of oxide of Mg and oxide of rare earth element

- MgO-Y₂O₃

### Part 17: Combination of oxide of Hf and oxide of rare earth element

- HfO₂-Hf₂La₂O₇
- HfO₂-Yb₂O₃
- HfO₂-Tb₂O₃
- HfO₂-Lu₂O₃
- HfO₂-Ho₂O₃
- HfO₂-Eu₂O₃
- HfO₂-Eu₂Hf₂O₇
- HfO₂-Er₂O₃
- HfO₂-Gd₂O₃
- HfO₂-Gd₂Hf₂O₇
- HfO₂-Y₂O₃
- HfO₂-Dy₂O₃

### Part 18: Combination of oxide of Al and oxide of rare earth element

- Al₂O₃-Y₃Al₅O₁₂
- Al₂O₃-Er₃Al₅O₁₂
- Al₂O₃-GdAlO₃
- Al₂O₃-Dy₃Al₅O₁₂

In addition, the combination of the component composition of the fiber and the matrix may be a multi-component system of three components or more so long as it keeps the equilibrium. As an example thereof, there is exemplified a combination of Al₂O₃-Y₃Al₅O₁₂-ZrO₂.

The shape of the fiber may be any of a short fiber or a long fiber, a fiber buddle, a nonwoven fabric, a two-dimensional or three-dimensional sheet form, or a fiber laminate. Though the oxide or complex oxide serving as the matrix is generally used in a powdered shape, a precursor of an oxide or complex oxide can also be used as the need arises. It is preferable that the purity of the oxide or complex oxide is higher. In general, the oxide or complex oxide having a purity of 97 % by mass, and preferably 99 % by mass or more is used.

The manufacturing method of the oxide matrix composite material according to the present invention is not particularly limited. As an example, there is exemplified a method in which a fiber sheet composed of a two-dimensionally or three-dimensionally woven oxide or complex oxide is dipped in a slurry having an oxide or complex oxide powder serving as a matrix dispersed therein, and this dipping is repeated, thereby sufficiently filling the oxide or complex oxide powder among the fibers, followed by drying and sintering at high temperatures. The porosity can also be controlled by performing pressure molding at a pre-stage of the sintering step.

In general, as for the temperature condition to be adopted in the sintering step, there are exemplified high temperatures at which the equilibrium state between the fiber and the matrix is kept, for example, 1,000°C or higher. However, it should not be construed that the temperature is limited thereto.

In addition, as an example, at the time of applying the oxide matrix composite material according to the present invention to a heat-resistant member, a fiber which has been three-dimensionally woven taking the stress direction of the heat-resistant member into consideration is used, the fiber is impregnated with a matrix component, and the matrix is sintered at a temperature of not higher than the temperature at which a liquid phase is formed, thereby enabling the matrix to be densified. Incidentally, it is possible to make the matrix denser by applying a compressive load at high temperatures by using a hot press or the like.

According to such a manufacturing method, since a melting process of the raw materials is not adopted, the interface between the fiber and the matrix is kept. Accordingly, the issue of a lowering of toughness, which is problematic in ceramic matrix composite materials manufactured by developing a fine complex structure in a cooling process after melting, can be dissolved.

The oxide matrix composite material according to the present invention is more specifically described below in detail by reference to the following Examples. As a matter of course, it should not be construed that the present invention is limited to these Examples.

### Examples

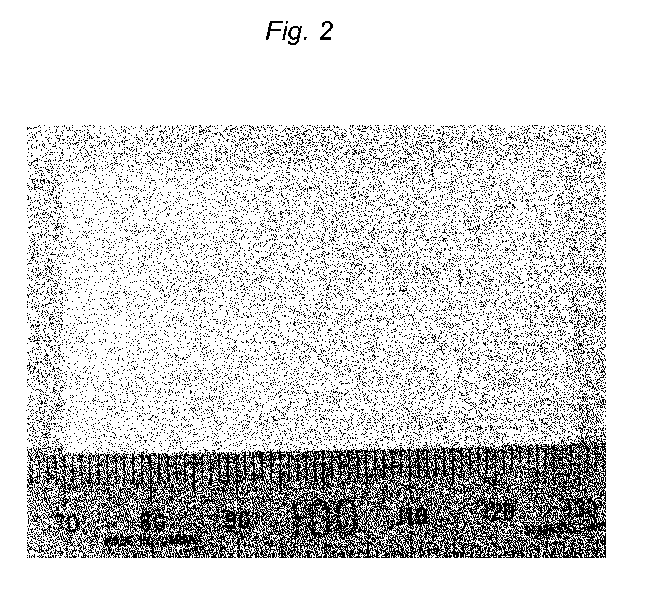

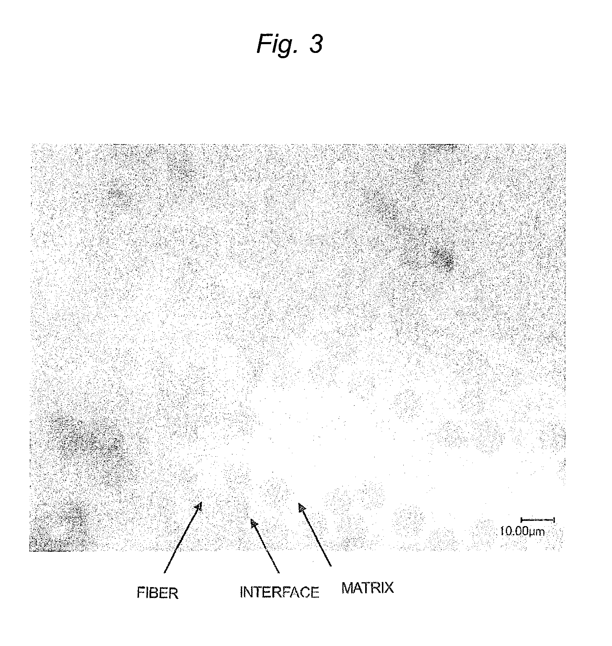

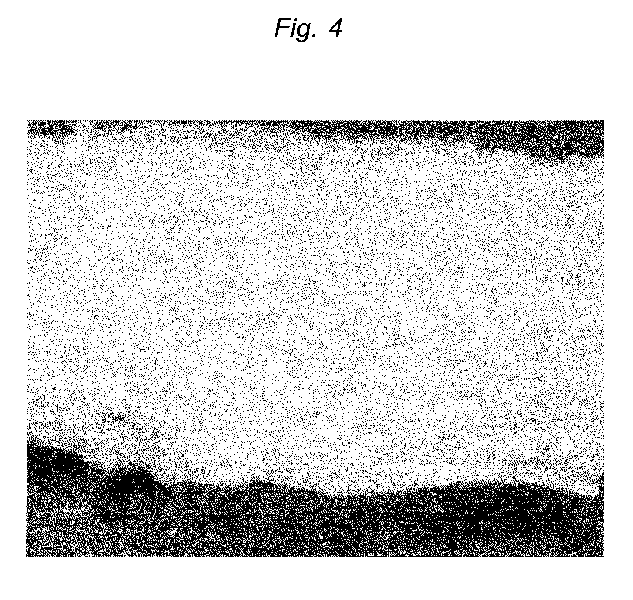

A sheet of 10 cm square in which 3Al₂O₃2SiO₂ (mullite) fibers having a fiber diameter of about 10 µm had been two-dimensionally woven was used. This sheet was dipped in a slurry in which an Al₂O₃ (alumina) powder serving as a matrix had been dissolved, thereby sufficiently filling the alumina powder among the fibers, followed by lifting up the sheet. This operation was carried out with respect to the sheet one by one, and the resulting 20 sheets were laminated. This laminate was subjected to a drying treatment of holding at 80°C for 5 hours, and thereafter, for achieving sintering of the alumina matrix, a sintering treatment at atmospheric pressure and 1,500°C for 2 hours was carried out in the air. With respect to the test sample after the sintering, an appearance thereof is shown in Fig. 2, and a microstructure in the cross section thereof is shown in Fig. 3. It is confirmed from the appearance photograph that the initial knitted shape of the fibers remains as it is. In addition, it is confirmed from the microstructure that the fibers and the matrix are not fused with each other, and a distinct interface (boundary line) is present between the fiber and the matrix while keeping the fiber diameter of about 10 µm. Fig. 4 shows a fracture surface at the time of being fractured by force. Since the fibers remain, irregularities of the fracture surface are large, and the fracture surface suggesting good toughness is presented. Furthermore, the sintered laminate was subjected to a heat resistance test in the air at atmospheric pressure under a high temperature condition at 1,300°C for 100 hours. As a result, the microstructure of the cross section after the test was the same as that in Fig. 3, and a distinct change was not perceived.

In this way, since the component composition which is equilibrated at high temperatures is used for the fiber and the matrix, even when held in the air at high temperatures at the time of manufacture and at the time of use, neither reaction nor fusion between the fiber and the matrix occurs, and the interface is kept at the boundary between the fiber and the matrix. Accordingly, it is confirmed that the original performance of the oxide matrix composite material is kept.

### Comparative Example

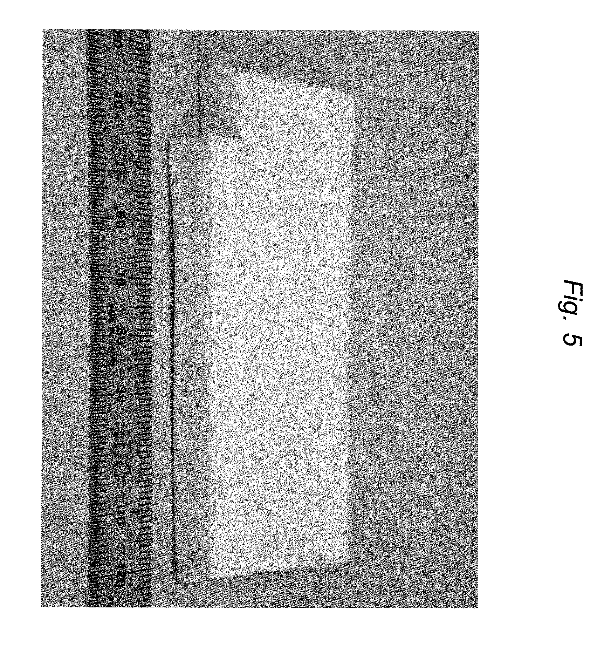

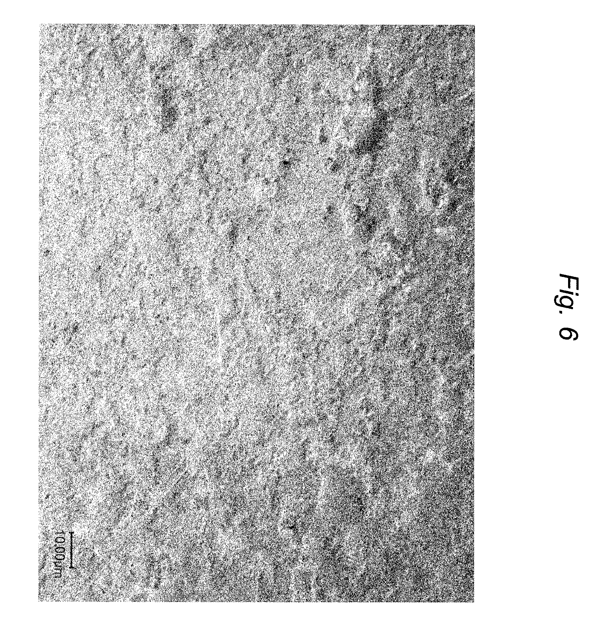

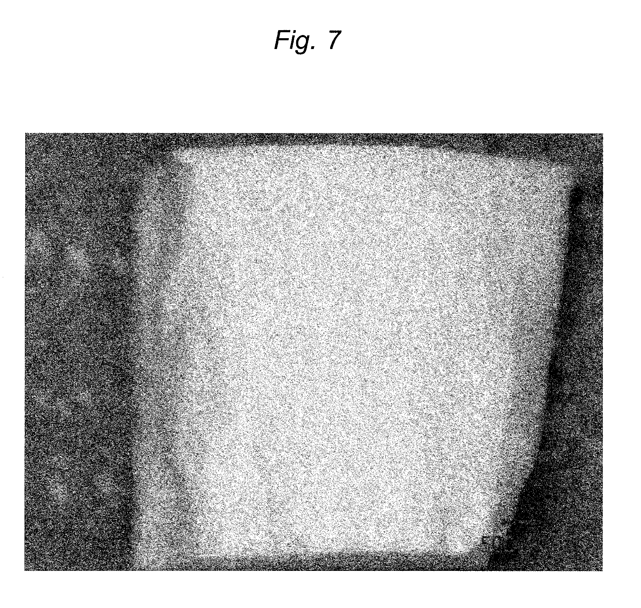

A test sample was fabricated under the same conditions as those in the Example, except for changing only the fiber. The used fiber is one obtained by two-dimensionally weaving (80 mass % Al₂O₃ + 20 mass % SiO₂) fibers having a fiber diameter of about 10 µm. Incidentally, this component composition is a component composition which is not thermodynamically equilibrated to the alumina matrix. With respect to the test sample after the sintering, an appearance thereof is shown in Fig. 5, and a microstructure in the cross section thereof is shown in Fig. 6. It is confirmed from the appearance photograph that the initial knitted shape of the fibers vanishes. In the microstructure, the fiber and the matrix are fused with each other and cause grain growth. Accordingly, it is confirmed that the interface between the fiber having an initial fiber diameter of about 10 µm and the matrix quite disappears, and the resulting test sample becomes similar to a monolithic ceramic. Fig. 7 shows a fracture surface at the time of being fractured by force. Since the fiber vanishes, and the resulting test sample becomes similar to a monolithic ceramic, the fracture surface is flat, suggesting that the toughness is low.

### Industrial Applicability

In the oxide matrix composite material according to the present invention, even when held at high temperatures at the time of manufacture and at the time of use, an interface between the fiber and the matrix is kept, and an enhancement in toughness is realized, without introducing a heterogeneous material which deteriorates the performance. Accordingly, it is possible to apply the oxide matrix composite material according to the present invention to heat-resistant members and the like.

## Claims

1. An oxide matrix composite material obtained by subjecting a fiber composed of at least one oxide or complex oxide and a matrix composed of at least one oxide or complex oxide to composite formation, **characterized in that** for the fiber and the matrix, a component composition is selected such that the fiber and the matrix keep thermodynamic equilibrium to each other in a temperature range not exceeding the melting temperature, and a fiber diameter of the fiber at the time of equilibrium keeps 1/2 or more of a fiber diameter of the fiber at the start of the composite formation.

2. The oxide matrix composite material according to claim 1, wherein the fiber and the matrix are formed of an oxide or complex oxide of Si, Ti, Zr, Mg, Hf, Al, or a rare earth element.
